# EUROPEAN PATENT APPLICATION

(11) **EP 4 570 665 A1**
(43) Date of publication of application: **18.06.2025**
(21) Application number: 23216312.1
(22) Date of filing: 13.12.2023
(51) Int. Cl.: B64D 41/00, B64D 45/02, H02N 1/04

(54) **ARRANGEMENT AND METHOD FOR HARVESTING TRIBOELECTRIC CHARGES ON A SKIN OF AN AIRCRAFT, METHOD OF MANUFACTURING, AND AIRCRAFT**

(71) Applicant: Airbus S.A.S., 31700 Blagnac (FR)
(72) Inventor: BONACCURSO, Elmar, 82024 Taufkirchen (DE)
(74) Representative: OTN Airbus SAS

(57) **Abstract**

An arrangement (10) for harvesting triboelectric charges on a skin of an aircraft, comprises at least one array of printed electrode elements (24) configured for being provided on a skin (22) of an aircraft (16) for collecting triboelectric charges (12), and a printed energy storing device (26) configured for being provided on the skin (22) of the aircraft (16) and electrically connected to the array of printed electrode elements (24), for storing the triboelectric charges (12) collected by the printed electrode elements (24). The arrangement is configured for being electrically connected to an electrical consumer unit (36) on board the aircraft.

## Description

The invention relates to an arrangement for harvesting triboelectric charges on a skin of an aircraft, and to a method for harvesting triboelectric charges on a skin of an aircraft. Further, the invention relates to a method of manufacturing an arrangement for harvesting triboelectric charges on a skin of an aircraft, and to an aircraft.

The invention is in particular applicable to airplanes and helicopters.

Charges usually accumulate naturally on the skins of aircrafts, like e.g. on the wings, on ailerons, on the fuselage skin and on other aircraft skins or surfaces. This is caused e.g. by the impact of charged aerosols on the aircraft surfaces during flight. But not only the impact of charged aerosols causes a charge transfer and thus the formation of an electrostatic potential on the skin of an aircraft. Also sliding drops as well as sliding or rolling solid particles can generate triboelectric charging of the skin.

This has recently been verified in a number of lab tests with sliding water drops. Uncharged drops sliding on dielectric surfaces collect electric charges via charge separation and are able to release tiny electric currents that are a function of drop size and sliding distance. A 45 µl- water droplet having a diameter of 2 mm sliding down an inclined plane for a length of 20 mm is able to release a current between 0.7 and 2.5 µA to a probe electrode.

The charges generated by sliding or rolling particles via charge separation are of similar magnitude to the charges transferred by impacting solid or liquid particles.

Such generation of charges is also called triboelectric charging, as it is due to the triboelectric effect. In general, triboelectric charging describes an electric charge transfer between two objects when they contact or slide against each other.

When an aircraft is flying through clouds, it is generally charged up negatively because of the triboelectric or frictional charging occurring as water, ice, snow or dust particles collide with the skin of the aircraft or slide or roll along the skin. This effect is called precipitation static or p-static. That means that an electrical charge, which is also called precipitation static or p-static, is caused on the aircraft. The charge also accumulates through friction between the aircraft hull and the air.

An accumulation of charges on the aircraft would result in a discharge in large batches into the surrounding air through pointed aircraft extremities, such as antennas, wing tips, vertical and horizontal stabilizers, and other protrusions. Such discharge creates a broad-band radio frequency noise (the p-static noise) from DC to 1000 MHz, which can affect aircraft communication
To avoid this, static dischargers, commonly known as static wicks or static discharge wicks, are installed at the trailing edges of the aircraft, including electrically grounded ailerons, elevators, rudder, wing, horizontal and vertical stabilizer tips. Fitted on almost all civilian aircrafts today, they are high electrical resistance rods with a lower corona voltage than the surrounding aircraft structure. Static wicks allow for a continuous and gradual discharge into the surrounding air, thus avoiding the p-static noise. They allow the continuous operation of on-board navigation and radio communication systems during p-static conditions.

It is the object of the invention to effectively remove triboelectric charges from aircraft skins.

According to a first aspect, the invention provides an arrangement for harvesting triboelectric charges on a skin of an aircraft, comprising at least one array of printed electrode elements configured for being provided on a skin of an aircraft for collecting triboelectric charges on the skin of the aircraft, and a printed energy storing device configured for being provided on the skin of the aircraft and electrically connected to the array of printed electrode elements, for storing the triboelectric charges collected by the printed electrode elements; wherein arrangement is configured for being electrically connected to an electrical consumer unit on board of the aircraft.

Preferably, the printed energy storing device comprises one or more printed battery elements and/or printed supercapacitor elements.

Preferably, the printed energy storing device is configured for being electrically connected to the electrical consumer unit on board the aircraft
Preferably, the arrangement comprises a printed battery management system designed for charging and discharging the energy storing device.

Preferably, the electrode elements and/or the energy storing device is printed directly on the skin of the aircraft or of a component of the aircraft.

Preferably, the electrode elements and/or the energy storing device is printed on one or more films applied on the skin of the aircraft or of a component of the aircraft.

Preferably, a printed electronic structure comprising the array of printed electrode elements and the printed energy storing device is printed directly on the skin of the aircraft or of a component of the aircraft. It may also be printed on one or more films applied on the skin of the aircraft or of a component of the aircraft.

Preferably, the printed electronic structure comprises the printed battery elements and/or supercapacitor elements.

Preferably, the printed electronic structure comprises the printed battery management system.

According to a second aspect, the invention provides a method for harvesting triboelectric charges on a skin of an aircraft, comprising the steps: collecting triboelectric charges on a skin of an aircraft by an array of printed electrode elements provided on the skin; storing the triboelectric charges collected by the printed electrode elements by at least one printed energy storing device electrically connected to the array of printed electrode elements; and using the collected triboelectric charges as electrical energy by one or more electrical consumer units on board of the aircraft.

Preferably, the printed energy storing device comprises one or more printed battery elements and/or printed capacitor elements, in particular printed supercapacitors.

Preferably, the energy storing device is charged and discharged by a printed battery management system.

According to a third aspect, the invention provides a method of manufacturing an arrangement for harvesting triboelectric charges on a skin of an aircraft, comprising: providing a skin of an aircraft and/or of a component of the aircraft; providing an array of printed electrode elements configured for collecting triboelectric charges on the skin, and providing a printed energy storing device on the skin, the printed energy storing device being electrically connected to the array of printed electrode elements and configured for storing the triboelectric charges collected by the printed electrode elements; wherein the printed energy storing device is configured for being electrically connected to one or more electrical consumer units on board of the aircraft.

Preferably, the array of printed electrode elements and the energy storing device is printed on a film and thereafter applied to the skin.

Advantageously, the array of printed electrode elements and the energy storing device is printed directly on the skin.

According to a fourth aspect, the invention provides an aircraft comprising an arrangement according to the first aspect of the invention.

Characteristics and advantages described in relation to the first aspect of the invention are also related to the other aspects of the invention and vice versa.

In particular, the invention suggests collecting and storing the electrical charges on-board as electrical energy to be used by electrical on-board devices.

Advantageously, flexible e-printing technologies are used to decorate large areas of an aircraft skin with properly distributed and spaced charge collecting electrode arrays, preferably made of electrically conductive inks. This can be done directly on the skin or the electrode arrays can be printed on adhesive films that are applied in a second step on the aircraft skin.

Preferably, e-printing technologies are used to integrate into the charge collecting functional films also charge storing devices, preferably in the form of supercapacitors or small battery cells.

Preferably a smart battery management system (BMS) is used to charge and discharge the charge storing devices, and above all to manage them in a smart way and to connect them to the on-board consumers that must be powered.

A specific advantage of the arrangement according to the invention is its multiple functionality: It provides local triboelectric energy harvesting with e-printed devices and storing the energy in the e-printed devices directly on the aircraft skin.

In particular advantageous is the use of the energy as power supply for electric devices in close vicinity.

As a further advantage, there are no electrical power losses due to closeness between power supply and consumer devices.

Moreover, no wiring, clamps or other mechanical or soldered connections are needed, since all is printed directly on an adhesive film or directly on the aircraft skin.

In particular, all-integrated electrical functions in a thin layer allow for fast manufacturing with e-printing, e.g. on adhesive foils or films.

Still further advantages are easy installation, a robust and maintenance-free device, as well as no aerodynamic penalties, since functional film can be applied flush to the aircraft skin.

In addition, no extra housing or structure is needed to integrate the energy harvesting and storing device.

Further, an extra low-weight solution is provided by the invention.

In the following, exemplary embodiments of the invention showing further characteristics and advantages are described in detail with reference to the figures, in which:
- **Fig. 1**: schematically shows a sectional view of an arrangement for harvesting triboelectric charges on a skin of an aircraft according to a preferred embodiment of the invention; and
- **Fig. 2**: schematically shows an aircraft according to a preferred embodiment of the invention, which is provided with several arrangements for harvesting triboelectric charges on a skin of an aircraft.

In the figures, similar or identical elements and features are designated by the same reference numbers. The features, functions and advantages discussed herein and shown in the embodiments can be achieved independently and can be combined in other embodiments.

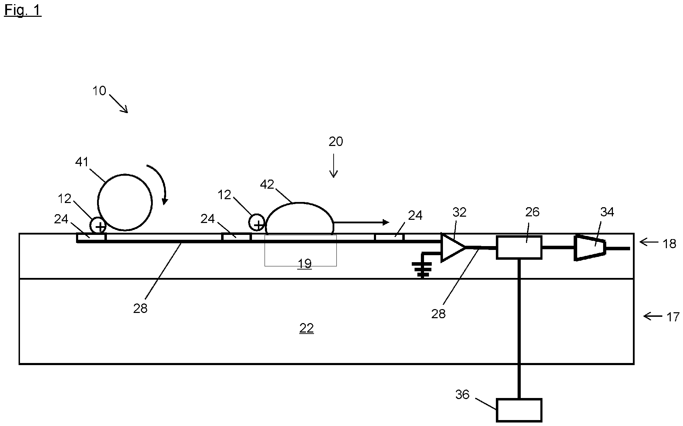

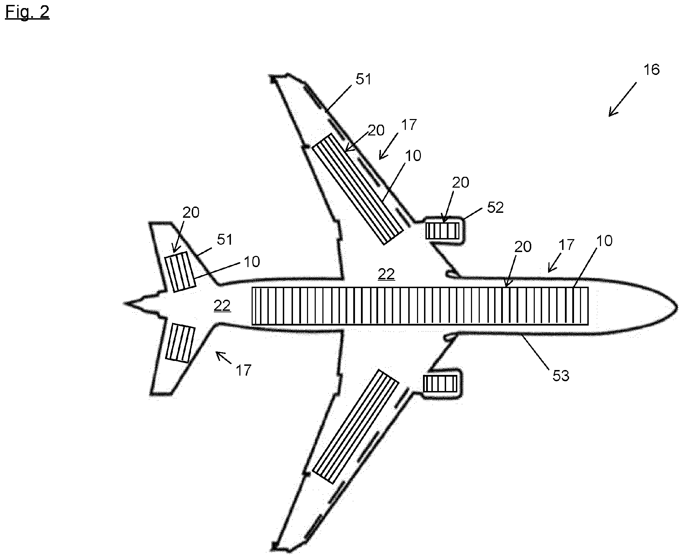

**Fig. 1** shows a sectional view of an arrangement 10 for harvesting triboelectric charges 12 which may occur on a skin of an aircraft. As an example, **Fig. 2** depicts an aircraft 16 equipped with a number of such arrangements 10 on its skin 22. The arrangements 10 are provided on different parts or components of the aircraft 16, like wings 51, engines 52, fuselage 53, and others. The arrangements 10 can also be applied to the skin or to skin portions of other components of the aircraft.

The arrangement 10 comprises a printed electronic structure 18 configured for being provided on and/or integrated in one or more areas 20 of a skin 22 of aircraft 16. The skin 22 may be part of a component 17 before, during or after assembly.

As depicted in detail in **Fig. 1****,** the printed electronic structure 18 comprises at least one array of printed electrode elements 24 which are designed for collecting the triboelectric charges 12 on the skin 22 of aircraft 16. Further, the printed electronic structure 18 comprises a printed energy storing device 26 which is e.g. configured as one or more batteries or supercapacitors, and which is electrically connected to the array of printed electrode elements 24. The printed energy storing device 26 is configured for storing the triboelectric charges 12 collected by the printed electrode elements12.

The printed energy storing device 26 is electrically connected to an electrical consumer unit 36 of aircraft 16.

A printed electric wiring 28 is part of the electronic structure 18 and connects the printed electrode elements 24 with the at least one printed energy storing device 26.

The electronic structure 18 further comprises a printed current amplifier 32 which amplifies the electric current generated by electrode elements 24 due to the collected triboelectric charges before it is conducted by printed electric wiring 28 to energy storing device 26.

The electronic structure 18 further comprises a printed battery management system 34 or BMS which is electrically connected to the energy storage device 26 by printed electric wiring 28. The printed battery management system 34 manages the charging and discharging of the energy storing device 26 and monitors its state. It calculates secondary data, controls its environment and potential overheating, etc.

The printed electronic structure 18 is integrated as printed electronics or e-printed on an adhesive film 19 which is applied to the aircraft skin 22 in one or more areas 20 thereof. In other embodiments, the electronic structure 18 is printed directly on aircraft skin 22 or on one or more areas 20. The electronic structure 18 may also be provided on one or more components 17 of the aircraft 16 before or during assembly by printing the electronic structure 18 directly on the respective skin areas 20 or by printing the electronic structure 18 on or in films or adhesive films 19 which are applied thereafter on the skin 22 or skin areas 20.

In particular, the arrangement 10 is integrated into the skin 22
In the following and with reference to **Figs. 1** **and** **2****,** a method for harvesting triboelectric charges on a skin of an aircraft will be described.

Solid particles 41 like dust, ice, etc. impacting on the aircraft skin 22 and rolling and/or sliding thereon, as well as impacting drops 42 sliding along the skin 22, produce triboelectric charges 12 on the skin 22. The array of printed electrode elements 24 provided on aircraft skin 22 collects these charges 12.

Then, the triboelectric charges 12 collected by the printed electrode elements 24 are stored by the one or more printed energy storing devices 26 which are electrically connected to the array of printed electrode elements 24, in order to use the charges 12 as electrical energy by one or more electrical consumer 36 units on board the aircraft 16.

The collected triboelectric charges are conducted by electric wiring 28 from the array of printed electrode elements 24 via current amplifier 26 to energy storage device 26, which is formed by one or more batteries or supercapacitors. Battery management system 34 controls the charging and discharging of energy storing device 26.

Now, a preferred method of manufacturing the arrangement 10 shall be described as an example:
An electronic structure 18 comprising an array of electrode elements 24 configured for collecting triboelectric charges 12 and at least one energy storing device 26 configured for storing the collected triboelectric charges 12 as electrical energy are printed on an adhesive film 18. Thereafter, the adhesive film 18 is applied to a skin portion 22 of an aircraft 16 or of a component 17 of the aircraft 16.

As an alternative to printing on a film, the array of electrode elements 24 configured for collecting triboelectric charges 12 and the at least one energy storing device 26 configured for storing the collected triboelectric charges 12 as electrical energy are printed directly on the skin 22 of aircraft 16 or of aircraft component 17.

The arrangement 10 forms an electric charge collection system with electrodes. Printed electronics is used for manufacturing ("e-printing"), which is a set of printing methods used to create electrical devices on various substrates.

In particular, large areas or adhesive films are decorated with printed electronic devices comprising the electronic structure 18, which comprises charge collectors.

The charge collectors are e.g. printed with printing machines at regular intervals all over the skin of an aircraft - or those areas that are available for it. Thus, the charges deposited by impacting, sliding, or rolling particles including drops can be collected in the form of tiny electric currents and directly used to power small electronic devices, or alternatively stored in batteries or supercapacitors. Such printed electronics films can be applied in several areas of an aircraft, like wings, fuselage, rudder, or engine cowlings. This energy can be retrieved by any other electrical consumer that is connected to the power grid made up of all storing devices.

Via machines for printing the charge collecting electrodes and the wirings, also other types of electrical devices can be printed, like the batteries or supercapacitors for storing the collected charges in the form of electric energy.

### List of reference numbers:

- 10: arrangement for harvesting triboelectric charges
- 12: charges
- 16: aircraft
- 17: component
- 18: printed electronic structure
- 19: adhesive film
- 20: area
- 22: skin
- 24: printed electrode elements
- 26: printed energy storing device
- 28: printed electric wiring
- 32: printed current amplifier
- 34: printed battery management system
- 36: consumer unit
- 51: wings
- 52: engines
- 53: fuselage

## Claims

1. Arrangement for harvesting triboelectric charges on a skin of an aircraft, comprising
at least one array of printed electrode elements (24) configured for being provided on a skin (22) of an aircraft (16) for collecting triboelectric charges (12), and
a printed energy storing device (26) configured for being provided on the skin (22) of the aircraft (16) and electrically connected to the array of printed electrode elements (24), for storing the triboelectric charges (12) collected by the printed electrode elements (24),
wherein the arrangement is configured for being electrically connected to an electrical consumer unit (36) on board the aircraft.

2. Arrangement according to claim 1, **characterized in that** the printed energy storing device (26) comprises one or more printed battery elements and/or printed supercapacitor elements.

3. Arrangement according to claim 1 or 2, **characterized in that** the printed energy storing device (26) is configured for being electrically connected to the electrical consumer unit (36) on board the aircraft

4. Arrangement according to one of the preceding claims, **characterized by** a printed battery management system (34) is designed for charging and discharging the energy storing device (26).

5. Arrangement according to one of the preceding claims, **characterized in that** the electrode elements (24) and/or the energy storing device (26) is printed directly on the skin (22) of the aircraft (16) or of a component (17) of the aircraft (16).

6. Arrangement according to one of claims 1 to 4, **characterized in that** the electrode elements (24) and/or the energy storing device (26) are printed on one or more films (19) applied on the skin (22) of the aircraft (16) or of a component (17) of the aircraft (16).

7. Method for harvesting triboelectric charges on a skin of an aircraft, comprising the steps:
- collecting triboelectric charges (12) on a skin (22) of an aircraft (16) by an array of printed electrode elements (24) provided on the skin (22);
- storing the triboelectric charges collected by the printed electrode elements (24) by at least one printed energy storing device (26) electrically connected to the array of printed electrode elements (24); and
- using the collected triboelectric charges (12) as electrical energy by one or more electrical consumer units (36) on board the aircraft (16).

8. Method according to claim 7, **characterized in that** the printed energy storing device (26) comprises one or more printed battery elements and/or printed supercapacitors.

9. Method according to claim 7 or 8, **characterized in that** the energy storing device (26) is charged and discharged by a printed battery management system (34).

10. Method of manufacturing an arrangement for harvesting triboelectric charges on a skin (22) of an aircraft (16), comprising:
- providing a skin (22) of an aircraft (16) and/or of a component (17) of the aircraft (16);
- providing an array of printed electrode elements (24) configured for collecting triboelectric charges (12) on the skin (22), and
- providing a printed energy storing device (26) on the skin (22), the printed energy storing device (26) being electrically connected to the array of printed electrode elements (24) and configured for storing the triboelectric charges (12) collected by the printed electrode elements (24);
- wherein the printed energy storing device (26) is configured for being electrically connected to one or more electrical consumer units (36) on board the aircraft (16).

11. Method according to claim 10, wherein the array of printed electrode elements (24) and the energy storing device (26) is printed on a film (19) and thereafter applied to the skin (22).

12. Method according to claim 10, wherein the array of printed electrode elements (24) and the energy storing device (26) is printed directly on the skin (22).

13. Aircraft, comprising an arrangement according to one of claims 1 to 6.
